# EUROPÄISCHE PATENTSCHRIFT

(11) **EP 1 928 692 B1**
(45) Veröffentlichungstag und Bekanntmachung des Hinweises auf die Patenterteilung: **14.04.2010**
(21) Anmeldenummer: 06762676.2
(22) Anmeldetag: 19.07.2006
(51) Int. Cl.: B60N 2/235

(54) **BESCHLAG FÜR EINEN FAHRZEUGSITZ**
FITTING FOR A VEHICLE SEAT
FERRURE POUR SIEGE DE VEHICULE

(30) Priorität: 30.09.2005 DE 102005046807
(43) Veröffentlichungstag der Anmeldung: 11.06.2008
(73) Patentinhaber: KEIPER GmbH & Co. KG, 67657 Kaiserslautern (DE)
(72) Erfinder: PETERS, Christoph, 42929 Wermelskirchen (DE); LEHMANN, Ulrich, 53347 Alfter (DE)
(74) Vertreter: Patentanwälte Hosenthien-Held und Dr. Held
(86) Internationale Anmeldenummer: PCT/EP2006/007072
(87) Internationale Veröffentlichungsnummer: WO 2007/039002

(56) Entgegenhaltungen:
- EP-A1- 1 225 086
- EP-A2- 1 526 238
- WO-A-2004/043733
- JP-A- 2002 101 997
- US-A1- 2005 052 063

## Beschreibung

Die Erfindung betrifft einen Beschlag mit den Merkmalen des Oberbegriffs des Anspruches 1.

Aus der DE 102 53 054 A1 und der prioritätsgleichen WO 2004/043733 A1, die als nächstliegender Stand der Technik betrechtet wird, ist jeweils ein Beschlag dieser Art bekannt, bei dem der Exzenter von einer Federanordnung mit zwei einander radial gegenüberliegenden, funktionell zusammenwirkenden Federn symmetrisch und damit querkraftfrei beaufschlagt wird, um seinerseits die zwei Riegel beim Verriegeln des Beschlages zu beaufschlagen. Die beiden Federn sind bezüglich der Achse des Beschlags um 90° versetzt zu den Riegeln in der gleichen Ebene angeordnet.

Die JP 2002-101997 A offenbart einen Beschlag mit zwei axial nebeneinander angeordnete, spiralförmig ausgebildete Federn, die mit ihren inneren Federende an einer geminesamen Klammer abgestützt sind und mit ihren äußeren Enden getrennte Funktionen ausführen. Die eine Feder spannt die beiden Beschlagteile gegeneinander vor, während die andere Feder den Exzenter beaufschlagt.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Aufgrund der spiralförmigen, Bauraum sparenden Ausbildung der Federn hat jede Feder ein äußeres und ein inneres Federende. Indem die beiden Federn der (einen vorhandenen) Federanordnung ineinander geschachtelt zentral angeordnet sind und mit ihren inneren Federenden den Exzenter beaufschlagen, kann einerseits aufgrund der Schachtelung eine symmetrische Einwirkung der Federanordnung auf den Exzenter erreicht werden, welche ohne Querkräfte ist. Diese querkraftfreie Einwirkung auf den Exzenter verhindert, dass sich dieser aufgrund von Querkräften aus seiner Soll-Lage seitlich verschiebt und damit seine Aufgabe schlechter erfüllt. Andererseits steht mit der zentralen Anordnung der Bauraum zwischen den Riegeln für andere Bauteile, beispielsweise für weitere Riegel, zur Verfügung. Mit dieser erhöhten Anzahl von Riegeln kann der Beschlag als Hochlastbeschlag ausgebildet und für Gurtintegralsitze eingesetzt werden, was die Vielseitigkeit des Beschlags erhöht.

Um möglichst wenig Bauraum zu beanspruchen ist die Federanordnung vorzugsweise in einer zentralen Aussparung des ersten Beschlagteils angeordnet, wobei es sich um eine durchgehende Öffnung oder eine einseitig geschlossene Vertiefung handeln kann. Um ausreichend Platz für den Exzenter zu bieten, ist die Federanordnung vorzugsweise in einer zum Exzenter axial versetzten Ebene angeordnet, was durch eine ebene Ausbildung des ersten Beschlagteils im Bereich der Aussparung auf einfache Weise erreicht werden kann.

Die beiden Federn sind vorzugsweise um die Achse herum und vorzugsweise bezüglich der Achse um 180° versetzt zueinander angeordnet, was jeweils das symmetrische Beaufschlagen des Exzenters konstruktiv vereinfacht. Mit ihren äußeren Federenden sind die beiden Federn vorzugsweise am ersten Beschlagteil abgestützt, was insbesondere im Falle einer Anordnung in der Aussparung des ersten Beschlagteils durch radiale Nuten oder dergleichen leicht zu realisieren ist. Bei der bevorzugten Anordnung in einer zum Exzenter axial versetzten Ebene können die inneren Federenden als axial abstehende Endfinger ausgebildet sein, welche in den Exzenter greifen, oder umgekehrt der Exzenter axial abstehende Vorsprünge aufweisen, welche von den dann vorzugsweise als Haken ausgebildeten inneren Federenden umgriffen werden.

Der erfindungsgemäße Beschlag wird bevorzugt bei einem Fahrzeugsitz zur Anbringung der Lehne am Sitzteil und Neigungseinstellung der Lehne eingesetzt, könnte aber auch anderweitig in einem Fahrzeugsitz verwendet werden.

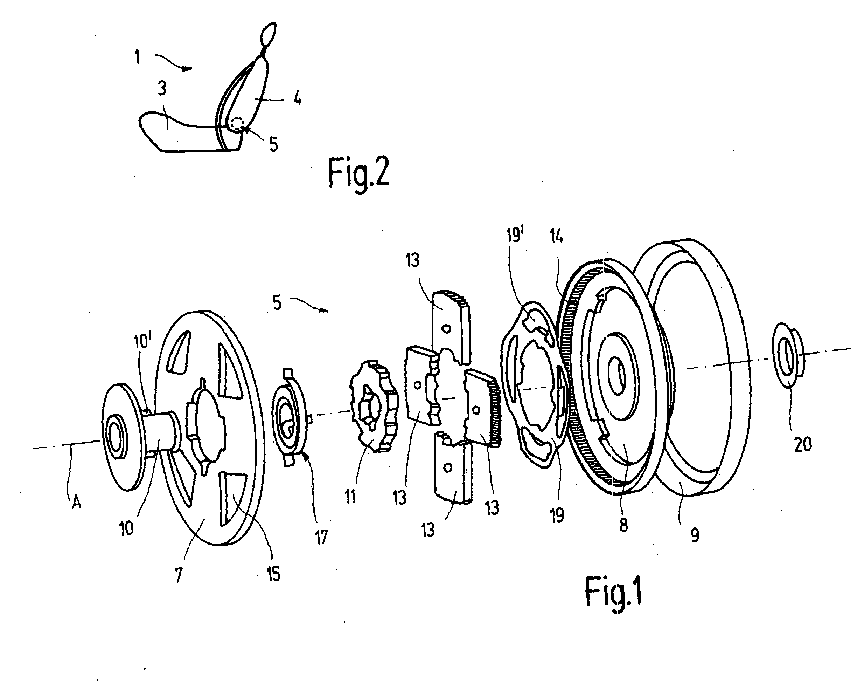

Im folgenden ist die Erfindung anhand eines in der Zeichnung dargestellten Ausführungsbeispiels mit einer Abwandlung näher erläutert. Es zeigen
- Fig. 1: eine Explosionsdarstellung des Ausführungsbeispiels,
- Fig. 2: eine schematische Darstellung eines Fahrzeugsitzes,
- Fig. 3: einen leicht perspektivisch dargestellten Schnitt durch das Ausführungbeispiel in einer Ebene zwischen den Riegeln und der Steuerscheibe,

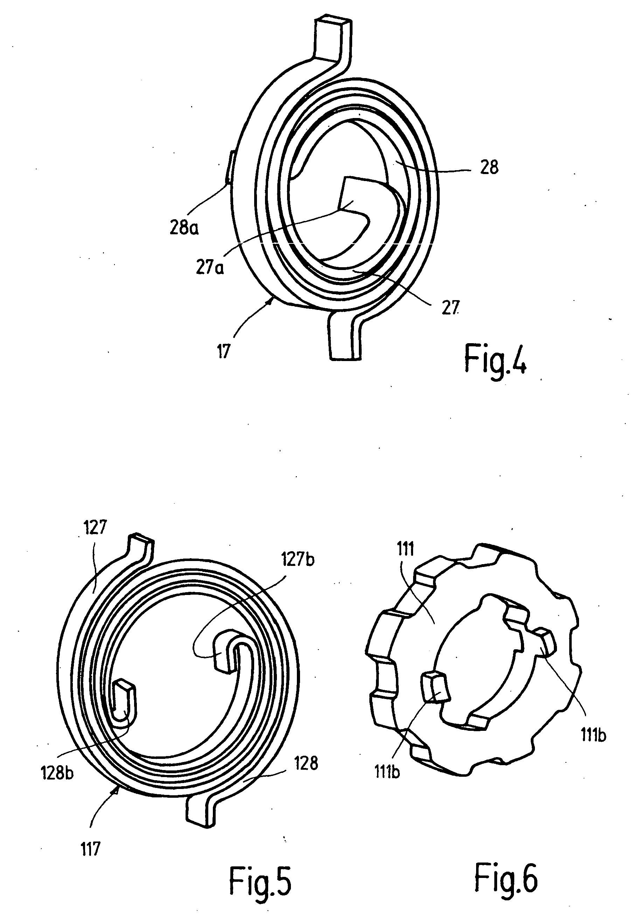

- Fig. 4: eine perspektivische Ansicht der Federanordnung des Ausführungsbeispiels,
- Fig. 5: eine perspektivische Ansicht der Federanordnung der Abwandlung, und
- Fig. 6: eine perspektivische Ansicht des Exzenters der Abwandlung.

Ein Fahrzeugsitz 1 eines Kraftfahrzeuges weist ein Sitzteil 3 und eine Lehne 4 auf, welche mittels zweier Beschläge seitlich am Sitzteil 3 angebracht, relativ zu diesem schwenkbar und mit unterschiedlichen Neigungseinstellungen verriegelbar ist. Die Ausrichtung des Fahrzeugsitzes 1 im Kraftfahrzeug und dessen gewöhnliche Fahrtrichtung definieren die verwendeten Richtungsangaben. Der Fahrzeugsitz 1 ist als Gurtintegralsitz ausgebildet, d.h. das obere Ende eines Sicherheitsgurtes ist an der Lehne 4 befestigt, genauer gesagt an einem Gurtautomat an der Oberkante der Lehne 4. Die im Belastungsfall über den Sicherheitsgurt in die Lehne 4 eingeleiteten Kräfte sind daher über die Beschläge ins Sitzteil 3 weiterzuleiten, weshalb wenigstens der Beschlag 5 auf der höherbelasteten Fahrzeugsitzseite, an welcher der Sicherheitsgurt angebracht ist, als Hochlastbeschlag ausgebildet ist.

Der Beschlag 5 beruht auf dem gleichen Prinzip, wie der in der DE 102 53 054 A1 beschriebene Beschlag, weshalb deren Offenbarung ausdrücklich einbezogen wird. Der Beschlag 5 ist als Rastbeschlag in einer Scheibenform ausgebildet. Der Beschlag 5 weist ein erstes Beschlagteil 7 und ein relativ zu diesem um eine Achse A verdrehbares zweites Beschlagteil 8 auf, welche zwischen sich einen Bauraum definieren. Ein reifenartiger Umklammerungsring 9 übergreift das zweite Beschlagteil 8 und ist mit dem ersten Beschlagteil 7 verbunden, wodurch die beiden Beschlagteile 7 und 8 axial zusammengehalten werden. Vorliegend ist das erste Beschlagteil 7 mit dem Sitzteil 3 und das zweite Beschlagteil 8 mit der Lehne 4 verbunden. Die umgekehrte Anordnung ist aber auch möglich.

Im Zentrum des Beschlags 5 ist ein Mitnehmer 10 angeordnet, welcher um die Achse A drehbar am zweiten Beschlagteil 8 gelagert ist. Auf dem Mitnehmer 10 sitzt drehfest oder wenigstens auf Mitnahme gekoppelt ein im Bauraum angeordneter Exzenter 11. Der Exzenter 11 wirkt auf vier gleiche Riegel 13 ein, welche um je 90° versetzt zueinander im Bauraum um den Exzenter 11 herum angeordnet sind und auf ihrer radial (bezüglich der Achse A) außen liegenden Seite mit einer Verzahnung versehen sind, um mit einem Zahnkranz 14 des als Hohlrad ausgebildeten zweiten Beschlagteils 8 zusammenzuwirken. Die Riegel 13 werden in radialer Richtung durch Führungssegmente 15 des ersten Beschlagteils 7 geführt. Das zweite Beschlagteil 8 liegt mit dem Zahnkranz 14 auf den vier Führungssegmenten 15 auf, wodurch das zweite Beschlagteil 8 am ersten Beschlagteil 7 gelagert ist.

Eine später genauer beschriebene Federanordnung 17 ist in einer zentralen Aussparung des ersten Beschlagteils 7 angeordnet und beaufschlagt den Exzenter 11, so dass dieser die Riegel 13 radial nach außen drückt, d.h. in den Zahnkranz 14, womit der Beschlag 5 verriegelt ist. Eine Steuerscheibe 19 ist im Bauraum axial zwischen den Riegeln 13 und dem zweiten Beschlagteil 8 angeordnet und sitzt vorliegend drehfest auf dem Exzenter 11. Die Steuerscheibe 19 weist vier Kulissen 19' auf, von denen jede mit einer Nase 13' je eines Riegels 13 zusammenwirkt, wobei die Nasen 13' in axialer Richtung von den Riegeln 13 abstehen. Bei einer Drehung des Mitnehmers 10 - und des damit angetriebenen Exzenters 11 und der Steuerscheibe 19 - entgegen der Kraft der Federanordnung 17 zieht die Steuerscheibe 19 die Riegel 13 radial nach innen, d.h. aus dem Zahnkranz 14, womit der Beschlag 5 entriegelt ist.

Der Mitnehmer 10 ist mittels einer Nabe in einer Öffnung des zweiten Beschlagteils 8 gelagert. Zwei angeformte Rippen 10' des Mitnehmers 10 liegen in axialer Richtung an der Innenseite des zweiten Beschlagteils 8 an, während ein auf der Außenseite des zweiten Beschlagteils 8 angeordneter Sicherungsring 20 - nach Aufclipsen beim Zusammenbau des Beschlags 5 - fest auf der Nabe des Mitnehmers 10 sitzt. Der Mitnehmer 10 ist damit axial gesichert.

Ein für die Bedienung des Beschlags 5 notwendiges Spiel könnte beim bestimmungsgemäßen Gebrauch, d.h. im Normalfall, zu einer Geräuschbildung führen. Es ist daher vorgesehen, dass bei verriegeltem Beschlag 5 bereits im Normalfall die Riegel 13 - bezüglich der radialen Richtung seitlich - verkippen können, um das Spiel (insbesondere in Umfangsrichtung) auszugleichen. Hierzu sind am Exzenter 11 erste Exzenternocken 21 und zweite Exzenternocken 22 ausgebildet, von denen die ersten Exzenternocken 21 radial etwas über die zweiten Exzenternocken 22 überstehen. Die vier ersten Exzenternocken 21 und die vier zweiten Exzenternocken 22 bilden vier Paare, wobei in Umfangsrichtung des Exzenters 11 betrachtet die Reihenfolge innerhalb eines Paares von Paar zu Paar wechselt, d.h. auf zwei zueinander benachbarte erste Exzenternocken 21 folgen zwei zueinander benachbarte zweite Exzenternocken 22 und umgekehrt. Jedes Paar ist genau einem Riegel 13 zugeordnet. An jedem Riegel 13 sind auf der dem Exzenter 11 zugewandten Seite und versetzt zur radialen Mittellinie des Riegels 13 zwei - vorzugsweise gleich ausgebildete - Riegelnocken 23 angeformt, von denen einer auf einen ersten Exzenternocken 21 und einer auf einen zweiten Exzenternocken 22 ausgerichtet und diesem zugeordnet ist.

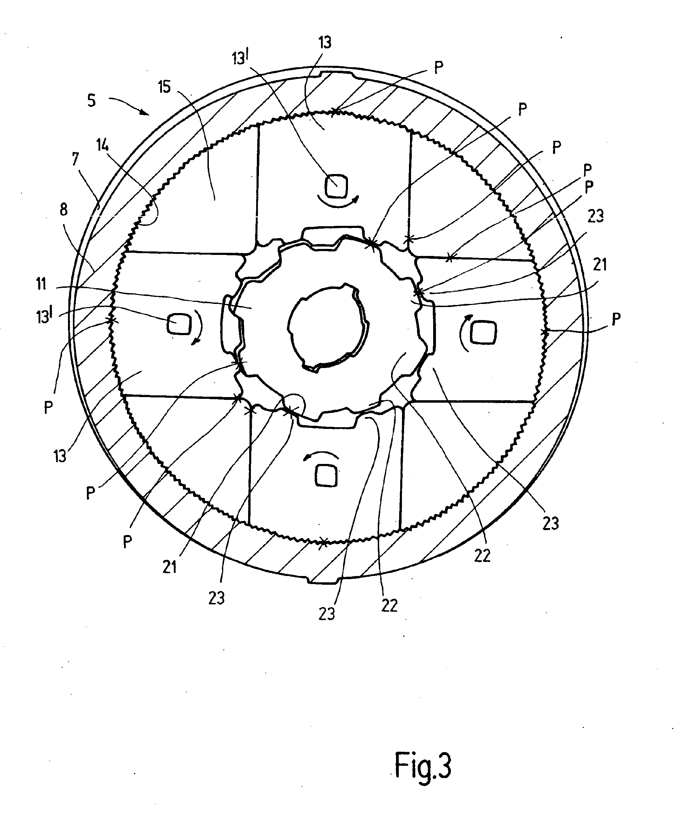

Wenn der Exzenter 11 die Riegel 13 beaufschlagt, bedeutet dies im Normalfall, dass nur der jeweils erste Exzenternocken 21 den ihm zugeordneten Riegelnocken 23 beaufschlagt, und damit den Riegel 13 radial nach außen bewegt während zwischen dem jeweils zweiten Exzenternocken 22 und dem ihm zugeordneten Riegelnocken 23 ein Spalt besteht. Sobald der Riegel 13 in den Zahnkranz 14 greift, kippt der Riegel 13, d.h. dreht sich etwas, in einer in Fig. 3 mit einem gekrümmten Pfeil angedeuteten Richtung, bis das Spiel ausgeglichen ist. Der Riegel 13 wirkt dann als Druckstrebe und steht an drei Punkten P in Kontakt mit jeweils einem anderen Bauteil des Beschlags 5, nämlich mit dem zugeordneten ersten Exzenternocken 21, d.h. dem Exzenter 11, dem benachbart nächstgelegenen Führungssegment 15, d.h. dem ersten Beschlagteil 7, und dem Zahnkranz 14, d.h. dem zweiten Beschlagteil 8. Aufgrund der abwechselnden Reihenfolge in den Paaren der Exzenternocken 21 und 22 kippen die Riegel 13 in abwechselnder Richtung, d.h. jeweils gegensinnig zu ihren jeweiligen Nachbarn. Je zwei einander gegenüberliegenden Riegel 13 kippen damit in die gleiche Richtung, welche gegensinnig zu derjenigen der jeweils anderen zwei Riegel 13 ist.

Wird nun auf die Lehne 4 eine Kraft ausgeübt, insbesondere im Crashfall, beispielsweise über den Sicherheitsgurt, erfährt das zweite Beschlagteil 8 ein Drehmoment. Das zweite Beschlagteil 8 übt dadurch mit dem Zahnkranz 14 eine Kraft in Umfangsrichtung auf die vier Riegel 13 aus. Für zwei Riegel 13 wirkt diese Kraft, d.h. Belastung, in die Richtung, in der sie gekippt sind, so dass sie zum einen die Kraft sofort weiterleiten können und zum anderen - gegebenenfalls unter elastischer und/oder plastischer Materialverformung - noch etwas weiter kippen, bis jeweils der bislang freie Riegelnocken 23 in Anlage an den zweiten Exzenternocken 22 gelangt, also kein Spalt mehr vorhanden ist. Diese kleine Bewegung der Riegel 13 führt allerdings zu einer geringfügig reduzierten Festigkeit. Bei einer weiteren Krafterhöhung wird die Kraft nun im wesentlichen über den bislang freien Riegelnocken 23 auf den Exzenter 11 weitergeleitet. Für die anderen beiden Riegel 13 wirkt die Kraft, d.h. Belastung, entgegen der Richtung, in der sie gekippt sind. Diese beiden Riegel 13 kippen daher entgegen der ursprünglichen Kipprichtung und leiten dabei die Kraft direkt über den jeweiligen ersten Exzenternocken 21 in den Exzenter 11 ein. In diesem Fall setzen diese beiden Riegel 13 der Belastung eine erhöhte Festigkeit entgegen.

Aufgrund des gegensinnigen Kippens der Riegel 13 im Normalfall stellt sich für Frontcrash und Heckcrash die gleiche Situation dar, d.h. der Kraftfluss geht jeweils durch ein Paar Riegel 13 mit zwei abgestützten Riegelnocken 23 (und dabei vorrangig über den zuvor freien Riegelnocken 23) und durch ein Paar Riegel, bei dem (weiterhin) nur ein Riegelnocken 23 abgestützt ist. Damit erhöht sich insgesamt die Festigkeit deutlich gegenüber einer Anordnung mit nur zwei Riegeln, aber auch gegenüber einer Anordnung, bei der alle Riegel in die gleiche Richtung kippen, womit einer Belastungsrichtung eine geringere Festigkeit entgegengesetzt würde.

Aus Bauraumgründen ist die Federanordnung 17 zentral im ersten Beschlagteil 7 angeordnet. Würde die Federanordnung 17 einseitig am Exzenter 11 angreifen, würden Querkräfte entstehen, welche den Exzenter 11 aus seiner zentrierten Lage in eine unsymmetrische Lage bringen würden, was seine Funktion verschlechtert. Um dies zu vermieden, umfasst die Federanordnung 17 eine erste Feder 27 und eine zweite Feder 28, welche jeweils für sich als Flachspiralfeder ausgebildet sind. Die beiden Federn 27 und 28 sind um die Achse A herum um 180° verdreht zueinander angeordnet und ineinander geschachtelt, d.h. die Abstände der jeweiligen Windungen sind so groß gewählt, dass zwischen zwei Windungen der ersten Feder 27 eine Windung der zweiten Feder 28 und zwischen zwei Windungen der zweiten Feder 28 eine Windung der ersten Feder 27 zu liegen kommt, und jeweils noch ein ausreichender Federweg für eine Kontraktion oder Expansion zur Verfügung steht.

Die Abstützung der beiden Federn 27 und 28 am ersten Beschlagteil 7 erfolgt mittels ihrer äußeren Federenden, welche radial abgewinkelt sind und formschlüssig in entsprechende radiale Nuten der zentralen Öffnung des ersten Beschlagteils 7 greifen, wobei diese einander radial gegenüberliegen. Die Beaufschlagung des Exzenters 11 durch die Feder 27 und 28 erfolgt mittels der jeweiligen inneren Federenden, die vorliegend für die erste Feder 27 als erster Endfinger 27a und für die zweite Feder 28 als zweiter Endfinger 28a bezeichnet sind. Die beiden Endfinger 27a und 28a sind axial abgewinkelt, da der Exzenter 11 in einer axial versetzten Ebene angeordnet ist, und sind einander radial gegenüber liegend angeordnet. Die Endfinger 27a und 28a greifen in entsprechend geformte seitliche Aussparungen einer zentralen Öffnung des Exzenters 11, mit welcher dieser den Mitnehmer 10 aufnimmt, d.h. die Endfinger 27a und 28a enden zwischen dem Mitnehmer 10 und dem Exzenter 11. Die symmetrische Anordnung, Abstützung und Beaufschlagung der beiden Federn 27 und 28 bewirkt eine Aufhebung der Querkräfte, so dass der Exzenter 11 insgesamt querkraftfrei beaufschlagt wird.

In einer Abwandlung des Ausführungsbeispiels weist eine Federanordnung 117 eine erste Feder 127 und eine zweite Feder 128 auf, die ebenfalls ineinander geschachtelt sind, aber anstelle der Endfinger einen ersten Haken 127b bzw. einen zweiten Haken 128b aufweisen, die jeweils radial nach innen gekrümmt sind. Zur Beaufschlagung des Exzenters 111 sind an diesem axial abstehende Finger 111b vorgesehen, welche die beiden Haken 127b und 128b umgreifen. In allen anderen Merkmalen stimmt die Abwandlung mit dem Ausführungsbeispiel überein.

Die Federn 17 und 18 bzw. 117 und 118 sollen auch dann als ineinander geschachtelt angesehen werden, wenn lediglich die Projektionen der Federn in einer Ebene senkrecht zur axialen Richtung überlappen, während die Federn axial versetzt zueinander angeordnet sind.

### Bezugszeichenliste

- 1: Fahrzeugsitz
- 3: Sitzteil
- 4: Lehne
- 5: Beschlag
- 7: erstes Beschlagteil
- 8: zweites Beschlagteil
- 9: Umklammerungsring
- 10: Mitnehmer
- 10': Rippe
- 11, 111: Exzenter
- 111b: Vorsprung
- 13: Riegel
- 13': Nase
- 14: Zahnkranz
- 15: Führungssegment
- 17, 117: Federanordnung
- 19: Steuerscheibe
- 19': Kulisse
- 20: Sicherungsring
- 21: erster Exzenternocken
- 22: zweiter Exzenternocken
- 23: Riegelnocken
- 27, 127: erste Feder
- 27a: erster Endfinger
- 28, 128: zweite Feder
- 28a: zweiter Endfinger
- 127b: erster Haken
- 128b: zweiter Haken
- A: Achse
- P: Punkt

## Patentansprüche

1. Beschlag für einen Fahrzeugsitz, insbesondere einen Kraftfahrzeugsitz, mit einem ersten Beschlagteil (7), einem relativ zum ersten Beschlagteil (7) um eine Achse (A) verdrehbaren zweiten Beschlagteil (8), einem antreibbaren und um die Achse (A) drehbar gelagerten Exzenter (11; 111), wenigstens zwei Riegeln (13), welche vom ersten Beschlagteil (7) bezüglich der Achse (A) in radialer Richtung geführt sind, vom Exzenter (11; 111) beaufschlagt radial nach außen bewegbar sind und zum Verriegeln des Beschlags (5) radial außen mit dem zweiten Beschlagteil (8) zusammenwirken, und wenigstens einer Federanordnung (17; 117) zum Beaufschlagen des Exzenters (11; 111), welche zwei spiralförmig ausgebildete Federn (27, 28; 127, 128) aufweist, **dadurch gekennzeichnet, dass** die beiden Federn (27, 28; 127, 128) der Federanordnung (17; 117) ineinander geschachtelt zentral angeordnet sind und mit ihren inneren Federenden den Exzenter (11; 111) beaufschlagen.

2. Beschlag nach Anspruch 1, **dadurch gekennzeichnet, dass** die Federanordnung (17; 117) in einer zentralen Aussparung des ersten Beschlagteils (7) angeordnet ist.

3. Beschlag nach Anspruch 1 oder 2, **dadurch gekennzeichnet, dass** die Federanordnung (11; 117) in einer zum Exzenter (11; 111) axial versetzten Ebene angeordnet ist.

4. Beschlag nach einem der vorhergehenden Ansprüche, **dadurch gekennzeichnet, dass** die beiden Federn (27, 28; 127; 128) um die Achse (A) herum angeordnet sind.

5. Beschlag nach einem der vorhergehenden Ansprüche, **dadurch gekennzeichnet, dass** die beiden Federn (27, 28; 127; 128) bezüglich der Achse (A) um 180° versetzt zueinander angeordnet sind.

6. Beschlag nach einem der vorhergehenden Ansprüche, **dadurch gekennzeichnet, dass** die beiden Federn (27, 28; 127; 128) mit ihren äußeren Federenden am ersten Beschlagteil (7) abgestützt sind.

7. Beschlag nach einem der vorhergehenden Ansprüche, **dadurch gekennzeichnet, dass** die inneren Federenden als axial abstehende Endfinger (27a; 28a) aüsgebildet sind, welche in den Exzenter (11) greifen.

8. Beschlag nach Anspruch 6, **dadurch gekennzeichnet, dass** die inneren Federenden als Haken (127b; 128b) ausgebildet sind, welche vom Exzenter (111) abstehende Vorsprünge (111 b) umgreifen.

9. Beschlag nach einem der vorhergehenden Ansprüche, **dadurch gekennzeichnet, dass** im Zentrum des Beschlags (5) ein Mitnehmer (10) angeordnet ist, welcher um die Achse (A) drehbar am zweiten Beschlagteil (8) gelagert ist, und auf welchem der Exzenter (11) drehfest oder wenigstens auf Mitnahme gekoppelt sitzt.

10. Fahrzeugsitz (1) mit einem Sitzteil (3) und einer Lehne (4), welche mittels wenigstens eines Beschlags (5) nach einem der vorhergehenden Ansprüche am Sitzteil (3) angebracht, relativ zu diesem schwenkbar und mit unterschiedlichen Neigungseinstellungen verriegelbar ist.

## Claims

1. A fitting for a vehicle seat, in particular a motor vehicle seat, with a first fitting part (7), a second fitting part (8) which can be rotated about an axis (A) relative to the first fitting part (7), a drivable eccentric (11; 111) which is mounted rotatably about the axis (A), at least two locking elements (13), which are guided in the radial direction with respect to the axis (A) by the first fitting part (7), can be moved radially outward under the action of the eccentric (11; 111), and interact radially outward with the second fitting part (8) in order to lock the fitting (5), and at least one spring arrangement (17; 117) for acting upon the eccentric (11; 111), **characterized in that** the spring arrangement (17; 117) has two springs (27, 28; 127, 128), which are arranged centrally nested one inside the other and which, with their inner spring ends, act upon the eccentric (11;111).

2. The fitting as claimed in claim 1, **characterized in that** the spring arrangement (17; 117) is arranged in a central cutout of the first fitting part (7).

3. The fitting as claimed in claim 1 or 2, **characterized in that** the spring arrangement (11; 117) is arranged in a plane offset axially with respect to the eccentric (11; 111).

4. The fitting as claimed in any of the preceding claims, **characterized in that** the two springs (27, 28; 127; 128) are arranged around the axis (A).

5. The fitting as claimed in any of the preceding claims, **characterized in that** the two springs (27, 28; 127; 128) are offset with respect to the axis (A) by 180° with respect to each other.

6. The fitting as claimed in any of the preceding claims, **characterized in that** the two springs (27, 28; 127; 128) are supported by their outer spring ends on the first fitting part (7).

7. The fitting as claimed in any of the preceding claims, **characterized in that** the inner spring ends are designed as axially protruding end fingers (27a; 28a), which engage in the eccentric (11).

8. The fitting as claimed in claim 6, **characterized in that** the inner spring ends are designed as hooks (127b; 128b) which engage around projections (111b) protruding from the eccentric (111).

9. The fitting as claimed in any of the preceding claims, **characterized in that**, in the center of the fitting (5), a driver (10) is arranged, which is pivoted around the axis (A) at the second fitting part, and on which the eccentric (11) is mounted so as to be rotationally coupled or at least be coupled for driving.

10. A vehicle seat (1) with a seat part (3) and a backrest (4) which is attached to the seat part (3) by means of at least one fitting (5) as claimed in any of the preceding claims, can be pivoted relative to said seat part and can be locked at different settings of the inclination.

## Revendications

1. Armature pour un siège de véhicule, en particulier pour un siège de véhicule automobile, avec une première partie d'armature (7), avec une deuxième partie d'armature (8) pouvant tourner autour d'un axe (A) par rapport à la première partie d'armature (7), avec un excentrique (11 ; 111) monté pivotant autour de l'axe (A) et pouvant être entraîné, avec au moins deux organes de verrouillage (13) qui sont guidés par la première partie d'armature (7) dans la direction radiale par rapport à l'axe (A), qui sont aptes à se déplacer radialement vers l'extérieur sous l'effet de l'excentrique (11 ; 111) et qui coopèrent dans la direction radiale vers l'extérieur avec la deuxième partie d'armature (8) afin de verrouiller l'armature (5) et avec au moins un agencement de ressorts (17 ; 117) destiné à solliciter l'excentrique (11 ; 111) et comprenant deux ressorts de forme spirale (27, 28 ; 127, 128), **caractérisé par le fait que** les deux ressorts (27, 28 ; 127, 128) de l'agencement de ressorts (17 ; 117) sont disposés centralement en étant emboîtés l'un dans l'autre et sollicitent l'excentrique (11; 111) par leurs extrémités intérieures.

2. Armature selon la revendication 1, **caractérisée par le fait que** l'agencement de ressorts (17 ; 117) est placé dans un évidement central de la première partie d'armature (7).

3. Armature selon l'une des revendications 1 ou 2, **caractérisée par le fait que** l'agencement de ressorts (17 ; 117) est placé dans un plan qui est décalé dans la direction axiale par rapport à l'excentrique (11 ; 111).

4. Armature selon l'une des revendications précédentes, **caractérisée par le fait que** les deux ressorts (27, 28 ; 127, 128) sont disposés autour de l'axe (A).

5. Armature selon l'une des revendications précédentes, **caractérisée par le fait que** les deux ressorts (27, 28 ; 127, 128) sont décalés entre eux de 180 ° par rapport à l'axe (A).

6. Armature selon l'une des revendications précédentes, **caractérisée par le fait que** les deux ressorts (27, 28 ; 127, 128) s'appuient par leurs extrémités extérieures sur la première partie d'armature (7).

7. Armature selon l'une des revendications précédentes, **caractérisée par le fait que** les extrémités intérieures des ressorts prennent la forme de doigts d'extrémité faisant saillie axialement (27a ; 28a) qui s'engagent dans l'excentrique (11).

8. Armature selon la revendication 6, **caractérisée par le fait que** les extrémités intérieures des ressorts prennent la forme de crochets (127b ; 128b) qui entourent des saillies (111b) se détachant de l'excentrique (111).

9. Armature selon l'une des revendications précédentes, **caractérisée par le fait qu'**il est prévu au centre de l'armature (5) un organe d'entraînement (10) qui est supporté par la deuxième partie d'armature (8) en pouvant tourner autour de l'axe (A) et avec lequel l'excentrique (11) est solidarisé ou au moins accouplé de manière à être entraîné.

10. Siège de véhicule (1) avec une assise (3) et un dossier (4) qui, à l'aide d'au moins une armature (5) telle que définie à l'une des revendications précédentes, est monté sur l'assise (3), est apte à pivoter relativement à celle-ci et est apte à être verrouillé dans différentes positions inclinées.
